# EUROPÄISCHE PATENTSCHRIFT

(11) **EP 2 612 734 B1**
(45) Veröffentlichungstag und Bekanntmachung des Hinweises auf die Patenterteilung: **14.09.2016**
(21) Anmeldenummer: 13150336.9
(22) Anmeldetag: 06.01.2013
(51) Int. Cl.: B25J 19/06

(54) **Kollisionserfassungsvorrichtung für Manipulatoren**
Collision detection device for manipulators
Dispositif de détection de collision pour manipulateurs

(30) Priorität: 05.01.2012 DE 102012100078
(43) Veröffentlichungstag der Anmeldung: 10.07.2013
(73) Patentinhaber: Wheelabrator Group GmbH, 48629 Metelen (DE)
(72) Erfinder: Wenda, Felix, 48249 Dülmen (DE)
(74) Vertreter: Tarvenkorn, Oliver

(56) Entgegenhaltungen:
- EP-A1- 0 273 217
- DE-A1- 3 004 015
- DE-U1- 9 001 548

## Beschreibung

Die Erfindung betrifft eine Kollisionserfassungsvorrichtung für Manipulatoren.

Aus der EP-A-0 273 217 ist eine solche Vorrichtung bekannt, mit einem Basiselement und einer Kollisionseinheit, die von einem Mantelelement umschlossen sind, wobei die Kollisionseinheit über Druckfedern im Ruhestand in einem gewissen Abstand zum Basiselement gehalten ist und ein zweites Detektorstück aufweist, das federnd an einem am Basiselement angeordneten Schalter geführt ist.

Bei der Oberflächenbehandlung von Werkstücken mit Strahlmitteln, die abrasiv oder oberflächenverfestigend wirken, werden oftmals Roboter eingesetzt, welche die Strahleinrichtung bzw. dessen Strahldüse entlang einer vorgegebenen Bahn verfahren. Werkstück und Roboter samt der Strahleinrichtung sind in einer geschlossenen Arbeitskammer eingehaust. Die Bahn der Roboterhand mit der wenigstens einen Strahldüse wird im Voraus festgelegt. Das Bearbeitungsprogramm kann dann später für gleichartige Werkstücke beliebig oft reproduziert werden. Werden verschiedenartige Werkstücke in die Arbeitskammer eingebracht, muss sichergestellt werden, dass das richtige Programm für das spezifische Werkstück aufgerufen wird. Kommt es versehentlich zu Vertauschungen des Programms, kann es zu Kollisionen zwischen dem Roboter und dem Werkstück kommen, die zu Beschädigungen der Anlage und des Werkstücks führen kann. Auch fehlerhafte Aufspannungen des Werkstücks in einer dafür vorgesehenen Halterung wie auch eine fehlerhafte Positionierung der Halterung in der Arbeitskammer können zu Kollisionen mit dem Roboter führen.

Die Oberflächenbehandlung von Werkstücken mittels Strahlmitteln führt zu einer sehr rauen Arbeitsumgebung. Einfache Tastsensoren, optische Sensoren wie auch Ultraschallsensoren sind aufgrund der ständigen Verwirbelungen und der Abrasivität des Strahlmittels in der Arbeitskammer zur Kollisionserkennung nicht einsetzbar, da sie in der Arbeitsumgebung nicht zuverlässig wirken und zu schnell verschleißen.

Aufgabe der vorliegenden Erfindung ist es daher, eine robuste Kollisionserfassungsvorrichtung für Manipulatoren anzugeben, die zuverlässig in der rauen Arbeitsumgebung einer Strahlmittel emittierenden Anlage wirkt und eine hohe Standzeit besitzt. Zudem soll damit nicht nur ein frontaler Aufprall erfassbar sein, sondern auch eine seitliche Berührung.

Diese Aufgabe wird jeweils durch eine Kollisionserfassungsvorrichtung mit den Merkmalen des Anspruchs 1 oder des Anspruchs 2 gelöst.

Erfindungswesentlich ist, dass - bei der ersten Ausführungsform gemäß Anspruch 1 - die beweglich gelagerte Kollisionseinheit über eine erste Druckfeder gegenüber einem Basiselement abgestützt ist und dass innerhalb der ersten Druckfeder eine zweite Druckfeder angeordnet ist. Beide Druckfedern sind mit unterschiedlichen Polen einer Signalleitung elektrisch leitend verbunden. Im Ruhezustand erstreckt sich die zweite Druckfeder nur bis auf eine im Vergleich zur ersten Druckfeder reduzierte Ausgangshöhe unterhalb der Kollisionseinheit und berührt somit die elektrisch leitenden Kontakte der Kollisionseinheit nicht. Beide Federn stehen konzentrisch und berühren sich ebenfalls nicht. Wird nun die Kollisionseinheit axial verschoben, so taucht dessen Gegenkontaktelement in die zweite, innere Druckfeder ein. Eine gewisse lineare Verschiebung führt noch nicht gleich zu einem Schließen der elektrischen Kontakte. Es ist also möglich, einen manuellen Probelauf des Manipulators mit geringen Verfahrgeschwindigkeiten durchzuführen und dabei dort bestimmte Punkte am Werkstück anzufahren und auch vorsichtig zu berühren.

Bei weiterer axialer Vorschubbewegung jedoch, wie etwa beim ungeplanten Aufprall des Manipulators auf ein Werkstück, verschiebt sich die Kollisionseinheit weiter in Richtung des Basiselements. Das Gegenkontaktelement berührt dann die zweite Druckfeder und ein elektrischer Kontakt wird geschlossen. Darüber kann die Steuerung veranlasst werden, die Bewegung sofort zu stoppen.

Bei einer seitlichen Auslenkung der Kollisionseinheit gegenüber dem Basiselement wird entweder das Gegenkontaktelement gegen die Windungen der inneren Druckfeder gedrückt oder die beiden Druckfedern berühren sich gegenseitig. In beiden Fällen wird ein Kontakt geschlossen.

Bei der zweiten Ausführungsform sind die innere Druckfeder und das Kontaktelement, welches sie bei Kollision berührt oder darin eintaucht, umgekehrt angeordnet. Die innere Druckfeder hängt deshalb von der Kollisionseinheit herab und wahrt zunächst einen Abstand zum Basiselement.

Sofern ein 3poliges Signalkabel verwendet wird, ist es möglich, zwischen einer Kollision des Gegenkontaktelements mit der inneren Druckfeder einerseits und einer Berührung der Feder untereinander, also zwischen den beschriebenen unterschiedlichen Kollisionsarten, andererseits zu unterscheiden.

Auch kann eine Kabelbruchüberwachung durch die dritte Phase des Kabels realisiert werden.

Vorzugsweise sind das Basiselement und/oder die Kollisionseinheit jeweils tellerförmig mit einem zylindrischen Randbereich ausgebildet, so dass sich eine einfache Anbringung des äußeren Mantelelements ergibt. Das Mantelelement umschließt dabei bevorzugt den jeweiligen zylindrischen Randbereich des Basiselements und/oder der Kollisionseinheit und ist mit diesem jeweils fest verbunden, beispielsweise über eine Schlauchschelle, die das Mantelelement an den Randbereich anpresst.

Eine Druckluftleitung kann in den Innenraum innerhalb des Mantelelements geführt sein, wobei dann im Innenraum auch wenigstens ein Drucksensor angeordnet ist. Auf diese Weise wird bei Beschädigungen des äußeren Mantelelements ein Druckabfall registriert.

Das Basiselement kann insbesondere aus einem elastomeren oder thermoplastischen, nicht leitfähigen Kunststoff gebildet sein, so dass das Basiskontaktelement ohne weitere Isolierung direkt darauf angebracht werden kann.

Die Erfindung wird nachfolgend mit Bezug auf die Zeichnung näher erläutert.
- Figur 1: eine Kollisionserfassungsvorrichtung 100 im Schnitt,
- Figur 2: ein elektrisches Ersatzschaltbild bei 2poliger und
- Figur 3: bei 3poliger Ausführung.

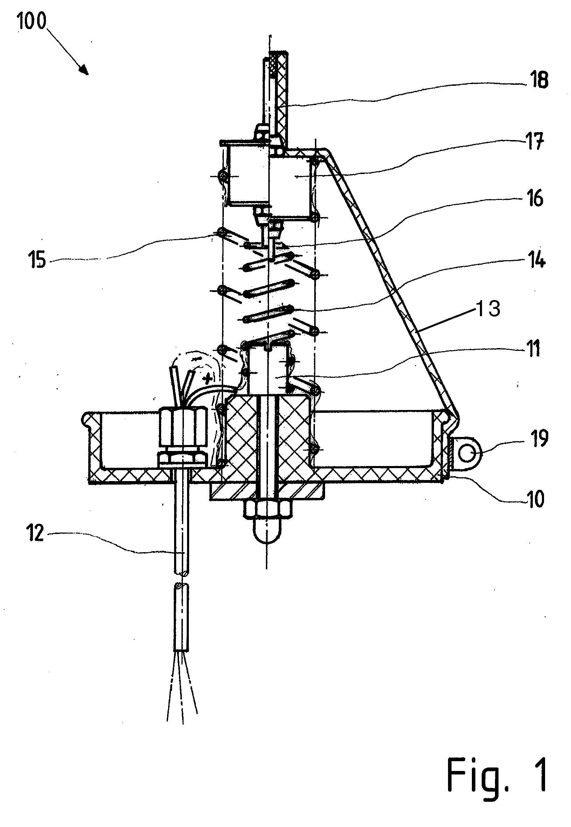

Figur 1 zeigt eine erfindungsgemäße Kollisionserfassungsvorrichtung 100 im Schnitt, und zwar rechts und links der Mittelachse, mit unterschiedlichen Positionen einer oben angeordneten, verschiebbaren Kollisionseinheit 17.

Ein Basiselement 10 dient der Verbindung mit einem Manipulator, wie beispielsweise der sogenannten Hand eines mehrachsigen Roboters. An ihm mündet eine wenigstens zweipolige Signalleitung 12. Einer der Pole ist mit einem am Basiselement 10 fest montierten Basiskontaktelement 11 verbunden.

Der andere Pol der Signalleitung 12 ist mit der äußeren, ersten Druckfeder 15 verbunden. Letztere wiederum steht mit Teilen der Kollisionseinheit 17 in elektrisch leitendem Kontakt. Auch eine direkte Kabelverbindung mit einer elektrischen Leitung, die bis zur Kollisionseinheit 17 reicht, ist möglich. Die Nutzung der Druckfeder als Leiter hat jedoch den Vorteil, dass diese alle Bewegungen mitmacht und eine besondere Kabelbefestigung oder Kabelführung entbehrlich ist.

Die Kollisionseinheit 17 kann als eine metallische Dose ausgebildet sein mit einem nach außen weisenden Taststift. Die Kollisionseinheit 17 ist im Ruhezustand über die erste Druckfeder 15 gegenüber dem Basiselement in einer Ausgangshöhe h₀ abgestützt. Weiterhin besitzt die Kollisionseinheit 17 ein elektrisch leitfähiges Gegenkontaktelement 16, welches über die erste Druckfeder und/oder über das dosenförmige Gehäuse der Kollisionseinheit 17 mit der Signalleitung 12 elektrisch leitend verbunden ist.

Erfindungswesentlich ist die Anordnung einer zweiten Druckfeder 14 mit kleinerem Durchmesser im Inneren der ersten Druckfeder 15.

Die zweite Druckfeder 14 berührt entweder das Basiskontaktelement 11 direkt, oder sie ist in sonstiger Weise mit der zum Basiselement 10 gehörenden Phase der Signalleitung 12 verbunden.

Die zweite Druckfeder 14 erstreckt sich im Ruhezustand bis auf eine reduzierte Ausgangshöhe h₁ < h₀, berührt also die Kollisionseinheit 17 und deren Gegenkontaktelement 16 zunächst nicht.

Ein äußeres Mantelelement 13, das insbesondere aus einem gegenüber dem Strahlmittel beständigen Elastomer besteht, umhüllt die gesamte Kollisionserfassungsvorrichtung 100 mit Ausnahme des Bodenbereichs des Basiselements 10, welcher dem Manipulator zugewandt ist. Das Mantelelement 13 läuft nach oben spitz zu und umschließt im oberen Bereich einen Taststift 18, der oben aus der beweglichen Kollisionseinheit 17 ragt. Nach unten ist das trichterförmige Mantelelement 13 offen. Es ist mit seinem Randbereich um den hochgezogenen zylindrischen Randbereich des Basiselements 10 gelegt und daran mittels einer Schlauchklemme 19 befestigt.

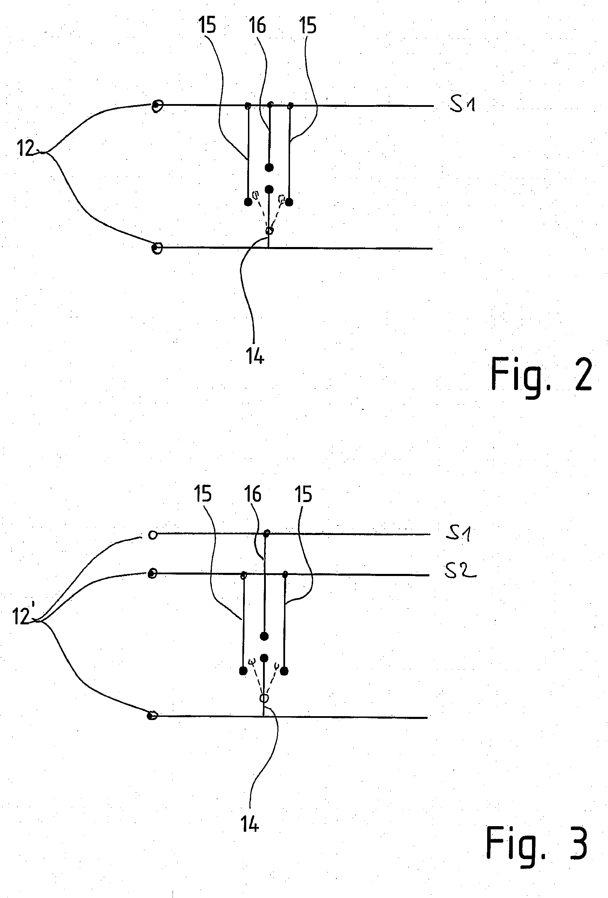

Figur 2 zeigt ein vereinfachtes elektrisches Ersatzschaltbild für ein zweipoliges Signalkabel 12. Das Gegenkontaktelement 16 wirkt, wenn es direkt auf die innere Feder 14 abgesenkt wirkt, als Taster.

Eine seitliche Bewegung der Kollisionserfassungsvorrichtung 100 führt zu einem Verbiegen der äußeren Feder 15 und darüber zu einer Berührung der inneren Feder 14 und somit zu einem Schließen des Kontaktes.

Figur 3 zeigt ein vereinfachtes elektrisches Ersatzschaltbild für ein dreipoliges Signalkabel. Das Gegenkontaktelement 16 wirkt, wenn es auf die innere Feder 14 abgesenkt wirkt, als Taster in Bezug auf die Signalleitung S1. Eine seitliche Bewegung der Kollisionserfassungsvorrichtung 100 wirkt als Taster in Bezug auf die Signalleitung S2.

## Patentansprüche

1. Kollisionserfassungsvorrichtung (100) für Manipulatoren, insbesondere in Strahlmittel emittierenden Anlagen, wenigstens umfassend:
- ein Basiselement (10) zur Verbindung mit einem Manipulator, das ein elektrisch leitfähiges und mit einem ersten Pol einer wenigstens zweipoligen Signalleitung (12) verbundenes Basiskontaktelement (11) enthält;
- eine Kollisionseinheit (17), die ein elektrisch leitfähiges Gegenkontaktelement (16) enthält, welches mit einem zweiten Pol der Signalleitung (12) verbunden ist und die im Ruhezustand über wenigstens eine erste Druckfeder (15) in einer ersten Ausgangshöhe gegenüber dem Basiskontaktelement (11) abgestützt ist und;
- eine zweite Druckfeder (14),
▪ die innerhalb der ersten Druckfeder (15) angeordnet ist,
▪ die mit dem ersten Pol der Signalleitung (12) elektrisch leitend verbunden ist,
▪ die sich vom Basiskontaktelement (11) ausgehend im Ruhezustand bis auf eine im Vergleich zur ersten Ausgangshöhe reduzierte zweite Ausgangshöhe bis unterhalb der Kollisionseinheit (17) erstreckt und
▪ die mit dem Gegenkontaktelement (16) beim Stauchen der ersten Druckfeder (15) durch Anstoßen oder Eintauchen in Berührung kommt und somit einen elektrischen Kontakt schließen kann;
- sowie einem flexiblen Mantelelement (13), das die gesamte Kollisionserfassungsvorrichtung (100) umschließt oder zumindest den Bereich zwischen dem Basiselement (10) und der Kollisionseinheit (17) dichtend überdeckt.

2. Kollisionserfassungsvorrichtung für Manipulatoren, insbesondere in Strahlmittel emittierenden Anlagen, wenigstens umfassend:
- ein Basiselement zur Verbindung mit einem Manipulator, das ein elektrisch leitfähiges und mit einem ersten Pol einer wenigstens zweipoligen Signalleitung verbundenes Basiskontaktelement enthält;
- eine Kollisionseinheit, die ein elektrisch leitfähiges Gegenkontaktelement enthält, welches über die erste Druckfeder mit einem zweiten Pol der Signalleitung verbunden ist, welches im Ruhezustand über wenigstens eine erste Druckfeder in einer ersten Ausgangshöhe gegenüber dem Basiskontaktelement abgestützt ist und;
- eine zweite Druckfeder,
▪ die innerhalb der ersten Druckfeder angeordnet ist,
▪ die mit dem zweiten Pol der Signalleitung elektrisch leitend verbunden ist,
▪ die von der Kollisionseinheit herabhängt und sich im Ruhezustand auf eine im Vergleich zu ersten Ausgangshöhe reduzierte zweite Ausgangshöhe bis oberhalb des Basiselements erstreckt und
▪ die mit dem Basiskontaktelement beim Stauchen der ersten Druckfeder durch Anstoßen oder Eintauchen in Berührung kommt und somit einen elektrischen Kontakt schließen kann;
- sowie einem flexiblen Mantelelement, das die gesamte Kollisionserfassungsvorrichtung umschließt oder zumindest den Bereich zwischen dem Basiselement und der Kollisionseinheit dichtend überdeckt.

3. Kollisionserfassungsvorrichtung (100) nach Anspruch 1 oder 2, **dadurch gekennzeichnet, dass** das Basiselement (10) und/oder die Kollisionseinheit (17) jeweils tellerförmig mit einem zylindrischen Randbereich ausgebildet ist (sind).

4. Kollisionserfassungsvorrichtung (100) nach Anspruch 3, **dadurch gekennzeichnet, dass** das Mantelelement (13) jeweils den zylindrischen Randbereich des Basiselements (10) und/oder der Kollisionseinheit (17) umschließt und mit diesem fest verbunden ist.

5. Kollisionserfassungsvorrichtung nach wenigstens einem der Ansprüche 1 bis 4, **dadurch gekennzeichnet, dass** eine Druckluftleitung in den Innenraum innerhalb des Mantelelements geführt ist und im Innenraum wenigstens ein Drucksensor angeordnet ist.

6. Kollisionserfassungsvorrichtung (100) nach wenigstens einem der Ansprüche 1 bis 5, **dadurch gekennzeichnet, dass** das Basiselement (10) aus einem elastomeren oder thermoplastischen, nicht leitfähigen Kunststoff gebildet ist.

7. Kollisionserfassungsvorrichtung (100) nach wenigstens einem der Ansprüche 1 bis 6, **dadurch gekennzeichnet, dass** die Kollisionseinheit (17) über die erste Druckfeder (15) mit der zweiten Signalleitung (12) verbunden ist.

## Claims

1. Collision detection device (100) for manipulators, in particular in abrasive-emitting installations, at least comprising:
- a base element (10) for connection to a manipulator, which element includes an electrically conductive base contact element (11) that is connected to a first pole of an at least two-pole signal line (12);
- a collision unit (17), which includes an electrically conductive mating contact element (16), which is connected to a second pole of the signal line (12) and in the state of rest is supported by way of at least a first compression spring (15) at a first starting height with respect to the base contact element (11) and;
- a second compression spring (14),
▪ which is arranged inside the first compression spring (15),
▪ which is connected in an electrically conducting manner to the first pole of the signal line (12),
▪ which extends from the base contact element (11) in the state of rest to below the collision unit (17), up to a second starting height that is reduced in comparison with the first starting height, and
▪ which comes into contact with the mating contact element (16) when there is compression of the first compression spring (15) by the element abutting or entering, and consequently can close an electrical contact;
- and a flexible casing element (13), which encloses the entire collision detection device (100) or covers over at least the region between the base element (10) and the collision unit (17) in a sealing manner.

2. Collision detection device for manipulators, in particular in abrasive-emitting installations, at least comprising:
- a base element for connection to a manipulator, which element includes an electrically conductive base contact element that is connected to a first pole of an at least two-pole signal line;
- a collision unit, which includes an electrically conductive mating contact element, which is connected by way of the first compression spring to a second pole of the signal line and in the state of rest is supported by way of at least a first compression spring at a first starting height with respect to the base contact element and;
- a second compression spring,
▪ which is arranged inside the first compression spring,
▪ which is connected in an electrically conducting manner to the second pole of the signal line,
▪ which hangs down from the collision unit and extends in the state of rest to above the base element, up to a second starting height that is reduced in comparison with the first starting height, and
▪ which comes into contact with the base contact element when there is compression of the first compression spring by the element abutting or entering, and consequently can close an electrical contact;
- and a flexible casing element, which encloses the entire collision detection device or covers over at least the region between the base element and the collision unit in a sealing manner.

3. Collision detection device (100) according to Claim 1 or 2, **characterized in that** the base element (10) and/or the collision unit (17) is (are) formed in each case in the form of a dish with a cylindrical peripheral region.

4. Collision detection device (100) according to Claim 3, **characterized in that** the casing element (13) respectively encloses the cylindrical peripheral region of the base element (10) and/or of the collision unit (17) and is fixedly connected thereto.

5. Collision detection device according to at least one of Claims 1 to 4, **characterized in that** a compressed-air line is led into the interior space within the casing element and at least one pressure sensor is arranged in the interior space.

6. Collision detection device (100) according to at least one of Claims 1 to 5, **characterized in that** the base element (10) is formed from an elastomeric or thermoplastic, nonconductive plastic.

7. Collision detection device (100) according to at least one of Claims 1 to 6, **characterized in that** the collision unit (17) is connected by way of the first compression spring (15) to the second signal line (12).

## Revendications

1. Dispositif de détection de collision (100) pour manipulateurs, en particulier dans des installations émettant des abrasifs, comprenant au moins :
- un élément de base (10) pour assemblage avec un manipulateur, qui contient un élément de contact de base (11) électroconducteur et relié à un premier pôle d'une ligne de signaux (12) au moins bipolaire ;
- une unité de collision (17), qui contient un contre-élément de contact (16) électroconducteur, lequel est relié à un deuxième pôle de la ligne de signaux (12), et qui est supportée à l'état de repos sur au moins un premier ressort de pression (15) sur une première hauteur initiale vis-à-vis de l'élément de contact de base (11) ; et
- un deuxième ressort de pression (14),
□ qui est disposé à l'intérieur du premier ressort de pression (15),
□ qui est relié de manière électroconductrice au premier pôle de la ligne de signaux (12)
□ qui s'étend en partant de l'élément de contact de base (11), à l'état de repos jusque sur une deuxième hauteur initiale réduite en comparaison de la première hauteur initiale, jusqu'en dessous de l'unité de collision (17), et
□ qui vient en contact en heurtant ou en plongeant avec le contre-élément de contact (16) lors du refoulement du premier ressort de pression (15) et peut fermer de ce fait un contact électrique ;
- ainsi qu'un élément d'enveloppe flexible (13), qui entoure tout le dispositif de détection de collision (100) ou recouvre hermétiquement au moins la zone située entre l'élément de base (10) et l'unité de collision (17).

2. Dispositif de détection de collision pour manipulateurs, en particulier dans des installations émettant des abrasifs, comprenant au moins :
- un élément de base pour assemblage avec un manipulateur, qui contient un élément de contact de base électroconducteur relié à un premier pôle d'au moins une ligne de signaux bipolaire ;
- une unité de collision, qui contient un contre-élément de contact électroconducteur, lequel est relié par le premier ressort de pression à un deuxième pôle de la ligne de signaux, lequel est supporté à l'état de repos sur au moins un premier ressort de pression à une première hauteur initiale vis-à-vis de l'élément de contact de base et ;
- un deuxième ressort de pression,
□ qui est disposé à l'intérieur du premier ressort de pression,
□ qui est relié de manière électroconductrice au deuxième pôle de la ligne de signaux,
□ qui pend de l'unité de collision et s'étend à l'état de repos sur une deuxième hauteur initiale réduite en comparaison de la première hauteur initiale, jusqu'au-dessus de l'élément de base, et
□ qui vient en contact en heurtant ou en plongeant avec l'élément de contact de lors du refoulement du premier ressort de pression et peut de ce fait fermer un contact électrique ;
- ainsi qu'un élément d'enveloppe flexible, qui entoure tout le dispositif de détection de collision ou recouvre hermétiquement au moins la zone située entre l'élément de base et l'unité de collision.

3. Dispositif de détection de collision (100) selon la revendication 1 ou 2, **caractérisé en ce que** l'élément de base (10) et/ou l'unité de collision (17) sont constitués en forme de disque avec une zone de bordure cylindrique.

4. Dispositif de détection de collision (100) selon la revendication 3, **caractérisé en ce que** l'élément d'enveloppe (13) entoure respectivement la zone de bordure cylindrique de l'élément de base (10) et/ou de l'unité de collision (17) et est fermement relié à celle-ci.

5. Dispositif de détection de collision selon au moins l'une quelconque des revendications 1 à 4, **caractérisé en ce qu'**un conduit d'air comprimé est guidé dans le compartiment intérieur à l'intérieur de l'élément d'enveloppe et au moins un capteur de pression est disposé dans le compartiment intérieur.

6. Dispositif de détection de collision (100) selon au moins l'une quelconque des revendications 1 à 5, **caractérisé en ce que** l'élément de base (10) est formé à partir d'une matière plastique élastomère ou thermoplastique, non conductrice.

7. Dispositif de détection de collision (100) selon au moins l'une quelconque des revendications 1 à 6, **caractérisé en ce que** l'unité de collision (17) est reliée par un premier ressort de pression (15) à la deuxième ligne de signaux (12).
